# EUROPEAN PATENT SPECIFICATION

(11) **EP 2 195 505 B1**
(45) Date of publication and mention of the grant of the patent: **21.11.2012**
(21) Application number: 08750825.5
(22) Date of filing: 29.04.2008
(51) Int. Cl.: E06B 3/263, E06B 3/30

(54) **EXTERNAL LAYER OF COMPOUND FRAMES FOR WINDOWS AND DOORS**
VERBUNDRAHMEN-AUSSENSCHICHT FÜR FENSTER UND TÜREN
COUCHE EXTERNE DE CADRES COMPOSITES POUR FENÊTRES ET PORTES

(30) Priority: 26.09.2007 HR 20070446
(43) Date of publication of application: 16.06.2010
(73) Proprietor: Troha-dil D.o.o, 43000 Bjelovar (HR)
(72) Inventor: KLASAN, Dinko, 43000 Bjelovar (HR); TESLA, Dalibor, 43000 Bjelovar (HR)
(74) Representative: Didak, Vinko
(86) International application number: PCT/HR2008/000014
(87) International publication number: WO 2009/040589

(56) References cited:
- DE-A1-102006 046 958
- DE-A1-102006 056 617
- DE-C1- 10 202 812

## Description

### TECHNICAL FIELDS

The invention belongs to the field of fixes frames and movable frames for door and window wings made of more parts of various materials. The subject of the invention is construction of external layer of frame that is fixed to the basic frame and protects a basic frame and glass surfaces from external weather influences. According to the seventh edition of International Classification of Patents, the invention belongs to the state of the art identified as follows:
E06B1/32 - frames for windows and doors or similar for building in openings, put together of parts of various materials,
E06B1/34 - covers of fixed frames, e.g. for protection against bad weather, as decoration,
E06B3/26 - compound frames, i.e. with one frame next to the other or behind the other for window or door wings,
E06B3/263 - frames for window or door wings with special means for insulation,
E06B3/30 - covers for frames for window or door wings, e.g. as the protection against weather influences or for decoration purposes.

### TECHNICAL PROBLEM

Compound fixed frames and movable frames of wings for windows and doors are composed of more mutually connected layers made of various materials. Interior layers are made of natural materials as e.g. wood to play the role of frame carriers loaded mainly with static and dynamic strains. External layer of the frame, exposed to thermal, light and atmospheric influences, protects the frame against all mentioned influences in order to provide for its functionality, durability and attractive appearance. Therefore, the external layer of a frame is usually made of aluminum profiles filled with foamy materials. Because of various mechanical and chemical characteristics of materials of which internal and external layers of compound frames are made, the technical problem represents their connection. The invention solves the technical problem of manufacturing and connecting external layers made of an aluminum profile filled with foamy material to the internal layer made of wood.

### BACKGROUND ART

The patent document No. AT409997B describes the construction of a compound fixed frame for windows and doors made of wooden frame to which external part thermal insulation layer of foam covered with metal profile, is fixed.

Patent document No. AT409522B describes the construction of a compound frame of wings for windows or doors made of wooden frame to which external side a thermal insulation layer of foam covered with metal profile, is fixed.

Patent document No. EP1178177B1 describes constructions of compound fixed frame and compound frame of wings for windows made of wooden frames and aluminum profiles filled with insulation foam. External layers made of aluminum profiles filled with insulation foam are fastened to wooden frames in the way, that insulation fillings are stuck directly to wooden frames or are fixed to them by means of snap joints.

Patent document EP1221525B1 describes embodiments of compound fixed frame and compound frame of wings for windows made of wooden frames and aluminum profiles filled with insulation foam. External layers made of aluminum profiles filled with insulation foams are fastened to wooden frames by means of guides pressed in insulation filling which is connected to T-shaped carriers fastened to wooden frames.

### ESSENCE OF THE INVENTION

Compound frames according to the invention have external layers made of insulation foam covered with aluminum covers fastened to wooden frames by plastic profiles and plastic fasteners. One end of each plastic profile and plastic fastener is fastened by screws to the wooden frame and the other end goes to the aluminum cover. The joint of the plastic profile and the plastic fastener with the aluminum cover is made as an elastic snap joint.

The essence of the invention is contained in the construction and the way of connecting the external layer of insulation foam covered with aluminum cover to wooden frames as defined in the claims. Plastic profiles and plastic fasteners are new bond elements enabling reliable and lasting mechanical bond of the external layer to the wooden frame. They also serve for accepting gaskets. As the plastic materials of which the plastic profile and the plastic fasteners are made are good thermal insulators, by their application thermal insulating characteristics of windows and doors are improved. The Snap joint of the plastic profile and the plastic fastener with the aluminum cover, enable their mutual longitudinal dilatation shifts because of thermal changes from the environment.

In solutions described in patent documents AT409997B and AT409522B, the connection of external layer is made without special bond elements, directly to wooden frames. In solutions described in patent documents EP1178177B1 and EP1221525B1 bond elements are guides pressed in insulation filling. In all mentioned patent documents, external layers made of insulation foam covered with aluminum covers, are fastened to wooden frames exclusively by insulation filling, whereas in solutions according to the invention external layers are made of insulation foam covered with aluminum covers fastened to wooden frames by aluminum profiles.

Document DE 10 2006 046 958 A1 discloses a framework according to the preamble of claims 1 and 2, document DE 10 2006 056 617 discloses a framework according to the preamble of claim 5.

### DESCRIPTION OF FIGURES

Figure 1 shows characteristic transversal cross-section of one side of a fixed compound frame and one side of a compound frame of wings for windows and doors having one common fixed external layer fastened to a fixed wooden frame and which in closed state covers the frame of a wing.
Figure 2 shows characteristic transversal cross-section of one side of fixed compound frame and one side of compound frame of the wing for windows and doors, having separate external layers fastened to their wooden frames.

### DESCRIPTION OF EMBODIMENTS AND APPLICATIONS

### Description of embodiments and application of external layers of compound frames for windows and doors fastened to fixed wooden frames

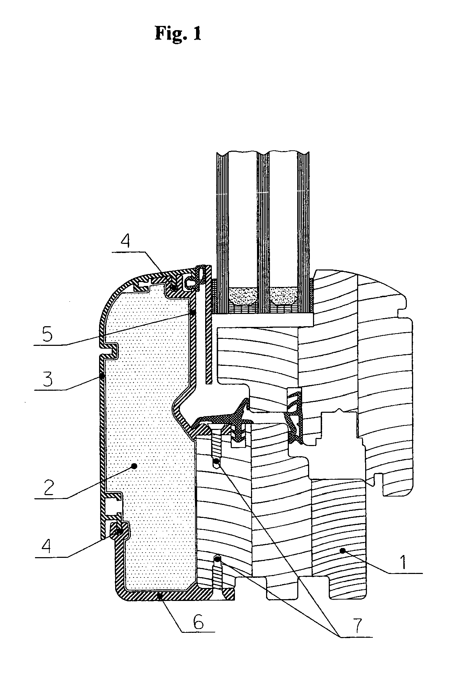

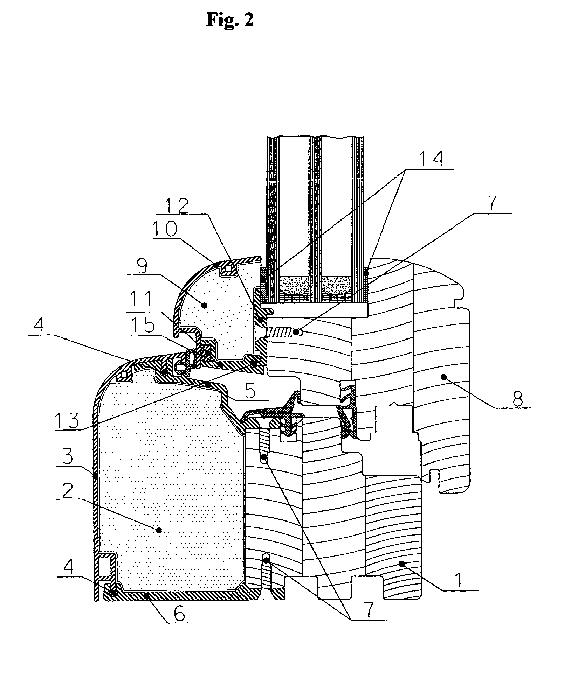

Embodiments of external layers fastened to fixed wooden frames are shown in figures 1 and 2. Both these embodiments have the same construction. They differ one from the other in that, that the embodiment of the external layer shown in Fig. 1 is elongated in the way, that by the upper end it seats to a frame of the wing without external layer, whereas the embodiment of the external layer shown in Fig. 2 is shorter and wider because by the upper end it seats to the frame of the wing with the external layer. The fixed wooden frame 1 is made of sides made of one or more layers of mutually stuck wooden profiles with made seat surfaces and grooves for acceptance of gaskets. To the external part of fixed wooden frame 1 there is fastened a multipart external layer consisting of relatively thick layer 2 of polymer foamy material as polystyrene or polyurethane and an aluminum cover 3. The layer 2 is made by pressing according to profiles shown in Figures 1 and 2 and by cutting to the necessary length of a side of the fixed wooden frame 1. The whole length of the side of the fixed wooden frame 1 along, the external surface of the layer 2 is covered with the aluminum profiled cover 3. On the lower, vertical end and upper slanting end of the aluminum cover 3 there are vertical tentacles with circularly formed tops 4. The thick layer 2 covered with the aluminium cover 3 is fastened by means of a plastic profile 5 and a plurality of plastic fasteners 6 to the fixed wooden frame 1. On the upper end of the plastic profile 5 0. there is made a vertical groove with circularly formed bottom and on its lower horizontal end there are holes for screws 7. The upper end of the plastic profile 5 is formed in a way that together with the upper end of aluminum cover 3 it forms a groove for an external upper rubber gasket. The lower horizontal end of the plastic profile 5 is formed in a way that together with the fixed wooden frame 1 it forms a groove for an external lower rubber gasket.

Plastic fasteners 6 are made similar as the plastic profile 5. On their free ends there are made vertical grooves with circularly formed bottom and on their horizontal ends leaning against the frame 1, there are holes for screws 7.

The procedure of assembling the external layer to the fixed wooden frame takes place in a way that from pre-finished profiles for the thick layer 2, aluminium cover 3 and plastic profile 5 there are cut parts for sides of the fixed frame. The external layer of one side of the fixed wooden frame 1 is put together in a way that on the thick layer 2 there is put a plastic profile 5. Then on the thick layer 2 with the plastic profile 5 there is put an aluminium cover 3, so that its vertical tentacle with circularly formed top 4 on the upper end is inserted in the vertical groove with circularly formed bottom made on the upper end of the plastic profile 5. The pre-assembled framework of the thick layer 2, aluminum cover 3 and the plastic profile 5 is put next to the external surface of a side of the fixed wooden frame 1 and fastened with screws 7 by which the lower horizontal end of the plastic profile 5 is fastened to the upper horizontal surface of the fixed wooden frame 1. The connected external layer of one side of the fixed wooden frame 1 is additionally fastened on the lower side to the fixed wooden frame 1 with plastic fasteners 6 that are arranged on equal mutual distances. Plastic fasteners 6 are arranged in a way that the vertical groove with circularly formed bottom on the external end of the plastic fastener 6 is pressed on the tentacle with circularly formed top 4 on the lower end of the aluminum cover 3 and its internal horizontal end is fastened by a screw to the lower horizontal surface of the fixed wooden frame 1. Instead of the plastic fasteners 6 arranged on determined distances there may be arranged a plastic profile which with the whole length of the side closes the lower side of external layer of the frame. In the groove formed by the upper end of the plastic profile 5 with the upper end of the aluminum cover 3 there is arranged an external upper rubber gasket and in the groove formed by the lower horizontal end of the plastic profile 5 with the fixed wooden frame 1 there is arranged an external lower rubber gasket by which the assembly of the external layer to the fixed frame 1 is finished.

There are in use external layers of compound frames for windows and doors fastened to fixed wooden frames, loaded on bending by moment of force by which the frame of a wing acts on the external layer through the external upper rubber gasket. This moment of force makes effort to separate the external layer from the fixed wooden frame 1. Complete mechanical stresses are transmitted to the plastic profile 5 and plastic fasteners 6 dimensioned for acceptance of these stresses. Therefore, solutions according to the invention in relation to solutions where mechanical stresses are transmitted to the thick layer 2 made of polymer foamy material, represent significantly more reliable and more durable solutions.

Snap joints between the aluminum cover 3, the plastic profile 5 and the plastic fasteners 6 enable their mutual longitudinal shifts as a consequence of action of heat from the environment. Owing to the use of plastic materials for making bond elements having a low coefficient of heat transmission, external layers according to the invention have high thermo-insulation characteristics.

### Description of embodiment and application of external layer of a compound frame for windows and doors fastened to the mobile wooden frame of a wing

An embodiment of an external layer fastened to a mobile wooden frame of a wing 8 is shown in Fig. 2. The mobile wooden frame of the wing 8 is made of sides that are also made of one or more layers mutually stuck wooden profiles with made seat surfaces and groove for acceptance of an external gasket. To the external mobile wooden frame of the wing 8 there is fastened a multipart external layer consisting of relatively thick layer 9 of polymer foamy material as polystyrene or polyurethane and an aluminum cover 10. The thick layer 9 is made by pressing according to the profile shown in Fig. 2 and cutting to the necessary length of the side of the frame of the wing 8. The whole length of the side of frame of the wing 8 along, the external surface of the thick layer 9 is covered with the aluminum cover 10. On the lower, vertical end of the aluminum cover 10 there is an horizontal tentacle 11 of rectangular cross-section.

The external layer of the frame of the wing made by the thick layer 9 of polymer foamy material and the aluminum cover 10 is fastened to the frame of wing 8 by means of parts connected by snap joints, screwed joints and sticking. The basis of a complex for fastening the external layer to the frame of the wing 8 is made of plastic holders 12 arranged on equal mutual distances by length of the side of the frame of the wing 8. The plastic holders 12 have the form of plates having on their lower ends horizontal tentacles with circularly shaped tops 13 and which are by screws 7 fastened to the external surface of the frame of a wing 8. The plastic holders 12 lie with their upper ends on the external double-sided adhesive band 14 by which a window glass is fastened. The external layer of the frame of the wing 8 is fastened from the lower side to the frame of a wing 8 by means of plastic fasteners 15 which on the external end have an horizontal rectangular groove for acceptance of the horizontal tentacle 11 of the aluminum cover 10 and on the internal end they have an horizontal groove with circularly formed bottom for acceptance of the horizontal tentacles with circularly shaped tops 13 on the plastic holders 12.

In the process of assembling the wings, in the wooden frame 8 a glass or other frame filling is inserted. Prior to inserting glass or filling, to edges of glass or filling double-sided adhesive bands 14 are stuck to external and internal side. The inserted glass or frame filling is fastened by plastic holders 12 that are by screws fastened to the external surface of frame of the wing 8. The plastic holders 12 lying on the external double-sided adhesive band 14 fasten by their upper ends the glass. The process of assembling the external layer to the wooden frame of the wing 8 takes place in the way, that from pre-finished profiles for the polymer thick layer 9 and the aluminum cover 10 parts for the sides of the frame of the wing 8, are cut. On the horizontal tentacle 11 of the aluminum cover 10 there are arranged plastic fasteners 15 and then between the plastic fasteners 15 and the aluminum cover 10 the polymer layer 9 is inserted. The pre-assembled framework of external layer consisting of the polymer thick layer 9, aluminum cover 10 and the plastic fasteners 15 is put on the plastic holders 12 in a way, that horizontal grooves with circularly shaped bottom of the plastic fasteners 15 are pulled on the horizontal tentacles with circularly shaped tops 13 of the plastic holders 12. Then, the upper part of polymer thick layer 9 is stuck to the upper part of external double-sided adhesive bond 14.

The described construction of the external layer of the frame of wing and the way of its connection to the frame of a wing 8, renders reliable and durable protection of wings against weather, thermal and mechanical influences. There has been in use the external layer of the frame of a wing 8 loaded to pressure by force by which the fixed frame through external upper rubber gasket, acts on the external layer of the frame of the wing. This pressure force is transmitted to the frame of the wing 8 through plastic fasteners 15 that are dimensioned for their acceptance. Snap joints between the aluminum cover 10 and the plastic fasteners 15 enable their mutual longitudinal dilatation shifts because of action of heat from the environment. Owing to the use of plastic materials for making the bond elements having a low coefficient of heat transmission, the external layer according to the invention has high thermo-insulating characteristics.

## Claims

1. Framework of external layer of compound frames for windows and doors for fixed wooden frames (1),
said framework comprising an external layer consisting of a thick layer (2) of polymer foamy material as polystyrene or polyurethane and of an aluminium cover (3) with an upper inclined end and a lower vertical end, whereby said external layer is fastenable to the fixed wooden frame (1),
**characterized in that** the framework further comprises a plastic profile (5) comprising a vertical groove with circularly formed bottom on its upper end, the upper part of the external layer being fastenable to the fixed wooden frame (1) by means of said plastic profile (5), a vertical tentacle with circularly formed top (4) made on the upper, inclined end of the aluminium cover (3) being inserted in said vertical groove of the plastic profile (5), the lower, horizontal end of the plastic profile (5) being fastenable to the upper horizontal surface of the fixed wooden frame (1) by means of screws (7),
the framework further being **characterized in that** it cooperates with a plurality of plastic fasteners (6) arranged on equal mutual distances, the plastic fasteners (6) comprising vertical grooves with circularly formed bottom on their external ends, the lower part of the external layer being fastenable to the fixed wooden frame (1) by means of said plastic fasteners (6), a vertical tentacle with circularly formed top (4) made on the lower, vertical end of the aluminium cover (3) being inserted in said vertical grooves of the plastic fasteners (6), the internal horizontal ends of the plastic fasteners (6) being fastenable to the lower horizontal surface of the fixed wooden frame (1) by means of screws (7).

2. Framework of external layer of compound frames for windows and doors for fixed wooden frames (1),
said framework comprising an external layer consisting of a thick layer (2) of polymer foamy material as polystyrene or polyurethane and of an aluminium cover (3) with an upper inclined end and a lower vertical end, whereby said external layer is fastenable to the fixed wooden frame (1),
**characterized in that** the framework further comprises a plastic profile (5) comprising a vertical groove with circularly formed bottom on its upper end, the upper part of the external layer being fastenable to the fixed wooden frame (1) by means of said plastic profile (5), a vertical tentacle with circularly formed top (4) made on the upper, inclined end of the aluminium cover (3) being inserted in said vertical groove of the plastic profile (5), the lower, horizontal end of the plastic profile (5) being fastenable to the upper horizontal surface of the fixed wooden frame (1) by means of screws (7),
the framework further being **characterized in that** it cooperates with a lower plastic profile which closes the whole length of the lower side of the external layer, the lower plastic profile comprising a vertical groove with circularly formed bottom on its external end, the lower part of the external layer being fastenable to the fixed wooden frame (1) by means of said lower plastic profile, a vertical tentacle with circularly formed top (4) made on the lower, vertical end of the aluminium cover (3) being inserted in said vertical groove of said lower plastic profile, the internal horizontal end of the lower plastic profile being fastenable to the lower horizontal surface of the fixed wooden frame (1) by means of screws (7).

3. Framework of external layer of compound frames according to claims 1 or 2, for windows and doors comprising a fixed wooden frame (1),
**characterized in that** the upper end of the plastic profile (5) and the upper end of the aluminium cover (3) form a groove for an external upper rubber gasket and **in that**, in use, the lower horizontal end of the plastic profile (5) and the fixed wooden frame (1) form a groove for an external lower rubber gasket.

4. Framework of external layer of compound frames according to claim 3, for windows and doors comprising a fixed wooden frame (1) and further comprising a mobile wooden frame of a wing (8),
**characterized in that,** in use, one common external layer is fastened to the fixed wooden frame (1) while the mobile frame of the wing has no external layer fastened to it, the upper end of the common external layer seating to the mobile frame of the wing through the external upper rubber gasket.

5. Framework of external layer of compound frames for windows and doors for mobile wooden frames of a wing (8),
said framework comprising an external layer consisting of a thick layer (9) of polymer foamy material as polystyrene or polyurethane and of an aluminium cover (10) with a rectangular tentacle (11), whereby said external layer is fastenable to the mobile wooden frame of the wing (8),
**characterized in that** the framework further comprises a plurality of plastic fasteners (15) comprising an external end with an horizontal rectangular groove and an internal end with an horizontal groove with circularly formed bottom, that are, in use, arranged on equal mutual distances along the length of the side of frame of the wing (8), the lower part of the external layer being fastenable to the mobile wooden frame of the wing (8) by means of said plurality of plastic fasteners (15), and **in that**
the framework cooperates with a plurality of plastic holders (12) arranged on equal mutual distances along the length of the side of the frame of the wing (8), the plastic holders (12) comprising horizontal tentacles with circularly formed tops (13), the plastic holders (12) further being fastenable to the external surface of the frame of the wing (8) by means of screws (7),
whereby the upper part of the polymer thick layer (9) cooperates with an external double-sided adhesive band (14) to which it is stuck, said adhesive band in turn being stuckable to the edges of a glass or a filling of the frame, said glass or said filling further being fastenable by means of said plurality of plastic holders (12),
and whereby the lower part of the external layer is fastened in a way that the horizontal rectangular grooves of the plastic fasteners (15) are slipped on the rectangular tentacle (11) of the aluminium cover (10), the tentacle being horizontal, and the horizontal grooves with circularly formed bottom are slipped on the horizontal tentacles with circularly formed tops (13) of the plastic holders (12).

## Patentansprüche

1. Der Außenschichtrahmen der bei festen Holzrahmen angewendeten zusammengesetzten Fenster- und Türrahmen (1), wobei der genannte Rahmen eine dicke Schicht (2) beinhaltet, die aus polymerem Schaummaterial, wie Polystyrol oder Polyurethan, und aus Aluminiumabdeckung (3) mit einem oberen Schrägende und einem unteren Senkrechtende zusammengesetzt ist, wobei die genannte Außenschicht an dem festen Holzrahmen (1) befestigt ist; dieser ist **dadurch bezeichnet**, dass dieser Rahmen fernerhin ein über eine auf seinem oberen Ende befindliche, mit rundförmigem unteren Rand versehene, senkrechte Rille beinhaltendes Kunststoffprofil (5) beinhaltet, dass das obere Teil der Außenschicht mittels genanntem Kunststoffprofil (5) an dem festen Holzrahmen (1) so befestigt ist, dass der, am oberen schrägen Ende der Aluminiumabdeckung (3) befindliche, senkrechte Greifarm mit rundförmiger Spitze (4) in der genannte senkrechte Rille des Kunststoffprofils (5) eingesetzt ist, und das untere, waagerechte Ende des Kunststoffprofils (5) mittels Schrauben (7) an der oberen waagerechten Fläche des festen Holzrahmens (1) befestigt ist; dass der Rahmen fernerhin dadurch bezeichnet ist, dass er über mehrere im gleichen Abstand gestellte Kunststoffklammern (6) verfügt, dass die Kunststoffklammern (6) an ihren äußeren Enden über senkrechte Rillen mit rundförmigen unteren Rändern verfügen; dass das untere Teil der Außenschicht mittels genannten Kunststoffklammern (6) an den festen Holzrahmen (1) so befestigt ist, dass der am unteren senkrechten Ende der Aluminiumabdeckung (3) befindliche senkrechte Greifarm mit rundförmiger Spitze (4) in den genannten senkrechten Rillen der Kunststoffklammern (6) eingesetzt ist, und dass die inneren waagerechten Enden der Kunststoffklammern (6) mittels Schrauben (7) an der unteren waagerechten Fläche des festen Holzrahmens (1) befestigt sind.

2. Der Außenschichtrahmen der bei festen Holzrahmen angewendeten zusammengesetzten Fenster- und Türrahmen (1), wobei der genannte Rahmen eine, aus einer dicken Schicht (2) des polymeren schaumigen Materials wie Polystyrol oder Polyurethan und aus einer Aluminiumabdeckung (3) mit einem oberen schrägen Ende und mit einem unteren senkrechten Ende bestehende, Außenschicht beinhaltet, wobei die genannte Außenschicht an dem festen Holzrahmen (1) befestigt ist, der **dadurch bezeichnet** ist, dass dieser Rahmen fernerhin ein über eine auf seinem oberen Ende befindliche, mit rundförmigem unteren Rand versehene, senkrechte Rille beinhaltendes Kunststoffprofil (5) beinhaltet, dass das obere Teil der Außenschicht an dem festen Holzrahmen (1) mittels genanntem Kunststoffprofil (5) so befestigt ist, dass der , am oberen schrägen Ende der Aluminiumabdeckung (3) befindliche, senkrechte Greifarm mit rundförmiger Spitze (4) in der genannten senkrechten Rille des Kunststoffprofils (5) eingelegt ist und das untere waagerechte Ende des Kunststoffprofils (5) mittels Schrauben (7) an der oberen waagerechten Fläche des festen Holzrahmens (1) befestigt ist; dass der Rahmen fernerhin dadurch bezeichnet ist, dass er über ein unteres, die ganze Länge der unteren Seite der Außenschicht schließendes, Kunststoffprofil verfügt, dass das untere Kunststoffprofil an seinem äußeren Ende über eine senkrechte Rille mit rundförmigem unteren Rand verfügt, dass das untere Teil der Außenschicht an dem festen Holzrahmen (1) mittels genanntem unteren Kunststoffprofil so befestigt ist, dass der, am unteren senkrechten Ende der Aluminiumabdeckung (3) befindliche , senkrechte Greifarm mit rundförmiger Spitze (4) in der genannten senkrechten Rille des genannten unteren Kunststoffprofils eingesetzt ist, und das untere, waagerechte Ende des unteren Kunststoffrahmens mittels Schrauben (7) an der unteren waagerechten Fläche des festen Holzrahmens (1) befestigt ist.

3. Der den festen Holzrahmen (1) beinhaltende Außenschichtrahmen der dem 1. oder 2. Patentanspruch entsprechenden zusammengesetzten Fenster- und Türrahmen (1); dieser ist **dadurch bezeichnet,** dass das obere Ende des Kunststoffprofils (5) und das obere Ende der Aluminiumabdeckung (3) die Rille für die äußere obere Gummidichtung formen und dass, im Einsatz, das untere waagerechte Ende des Kunststoffprofils (5) und der feste Holzrahmen (1) die Rille für die äußere untere Gummidichtung formen.

4. Der den festen Holzrahmen (1) beinhaltende Außenschichtrahmen der dem 3. Patentanspruch entsprechenden zusammengesetzten Fenster- und Türrahmen (1) und der fernerhin einen beweglichen Holzflügelrahmen (8) beinhaltet; das **dadurch bezeichnet** ist, dass, im Einsatz, eine gemeinsame Außenschicht an dem festen Holzrahmen (1) befestigt ist und zugleich der bewegliche Flügelrahmen über keine an ihn befestigte Außenschicht verfügt, und dass das obere Ende der gemeinsamen Außenschicht an den beweglichen Flügelrahmen über der oberen äußeren Gummidichtung ansitzt.

5. Der Außenschichtrahmen der zusammengesetzten Fenster- und Türrahmen für bewegliche Holzflügelrahmen (8), wobei der genannte Rahmen eine Außenschicht beinhaltet, die aus einer dicken Schicht (9) aus polymerem Schaummaterial, wie Polystyrol oder Polyurethan, und aus Aluminiumabdeckung (10) mit einem rechteckigen Greifarm (11) zusammengesetzt ist, wobei die genannte Außenschicht an dem beweglichen Holzflügelrahmen befestigt ist; das **dadurch bezeichnet** ist, dass dieser Rahmen fernerhin mehrere Kunststoffklammern beinhaltet (15), deren äußeres Ende über eine rechteckige waagerechte Rille verfügt und deren inneres Ende über eine waagerechte Rille mit rundförmigem unteren Rand verfügt, die, im Einsatz, entlang der Seite des Flügelrahmens (8) im gleichen Abstand gestellt sind, dass das untere Teil der Außenschicht an dem beweglichen Holzflügelrahmen (8) mittels mehreren Kunststoffklammern (15) befestigt ist und dass dieser Rahmen über mehrere, im gleichen Abstand entlang der Seite des Flügelrahmens (8) gestellte, Kunststoffhalter (12) verfügt, dass die Kunststoffhalter (12) über waagerechte Greifarme mit rundförmigen Spitzen (13) verfügen, dass die Kunststoffhalter (12) fernerhin an der äußeren Fläche des Flügelrahmens (8) mittels Schrauben (7) befestigt werden, wobei das obere Teil der polymeren dicken Schicht (9) mit dem äußeren beidseitigen Klebeband (14) verbunden ist, woran er zugleich angeklebt ist, dass das genannte Klebeband an Glasscheibenränder oder Rahmenfüllungen angeklebt ist, und dass diese Glasscheibe oder Rahmenfüllung fernerhin mittels mehreren Kunststoffhaltern (12) befestigt ist, und wobei das untere Teil der Außenschicht so befestigt ist, dass die waagerechten rechteckigen Rillen der Kunststoffklammern (15) an den rechteckigen waagerechten Greifarm (11) der Aluminiumabdeckung angezogen sind, und dass die waagerechten Rillen mit rundförmigem unteren Rand an den waagerechten Greifarmen mit rundförmigen Spitzen (13) der Kunststoffhaltern (12) angezogen sind.

## Revendications

1. Le cadre de la couche extérieure des cadres de fenêtres et de portes mixtes, pour les chassis fixes en bois (1), ledit cadre coprenant une couche extérieure constituée d'une couche épaisse (2) de matériaux polymères mousseux tel que polystyrène ou polyurethane et d'un revêtement en aluminium (3) avec une extremité supérieure, oblique et une extremité inférieure, verticale, ladite couche extérieure étant fixée sur le chassis fixe en bois (1), **caractérisé en ce que** ce cadre comprend en outre, un profil en plastique (5) comprenant à son extremité supérieure, une rainure verticale à fond circulaire, que la partie supérieure de la couche extérieure est fixée sur le chassis fixe en bois (1) au moyen dudit profil en plastique (5) de sorte que la languette verticale à bout circulaire (4) arrangée sur l'extremité supérieure, oblique du revêtement en aluminium (3) est insérée dans ladite rainure verticale du profil en plastique (5) et l'extremité inférieure, horizontale du profil en plastiuque (5) est fixée sur la surface supérieure, horizontale du chassis fixe en bois (1) au moyen de vis (7), le cadre étant en outre **caractérisé en ce qu'**il contient plusieurs attaches en plastique (6) placées à égales distances mutuelles, que lesdites attaches en plastique (6) comportent des rainures verticales à fond circulaire arrangées sur leurs extrêmités extérieures, que la partie inférieure de la couche extérieure est fixée sur le chassis fixe en bois (1) au moyen desdites attaches en plastique (6) de sorte que la languette verticale à bout circulaire (4) arrangée sur l'extremité inférieure verticale du revêtement en aluminium (3) est insérée dans lesdites rainures verticales des attaches en plastique (6), et que les extrémités intérieures, horizontales des attaches en plastique (6) sont fixées au moyen de vis (7) sur la surface inférieure, horizontale du chassis fixe en bois (1).

2. Le cadre de la couche extérieure des cadres de fenêtres et de portes mixtes, pour les chassis fixes en bois (1), ledit cadre coprenant une couche extérieure constituée d'une couche épaisse (2) de matériaux polymères mousseux tel que polystyrène ou polyurethane et d'un revêtement en aluminium (3) avec l'extremité supérieure, oblique et l'extremité inférieure verticale, ladite couche extérieure étant fixée sur le chassis fixe en bois (1), **caractérisé en ce que** ce cadre comprend en outre un profil en plastique (5) comprenant à son extremité supérieure, une rainure verticale à fond circulaire, que la partie supérieure de la couche extérieure est fixée sur le chassis fixe en bois (1) au moyen dudit profil en plastique (5) de sorte que la languette verticale à bout circulaire (4) arrangée sur l'extrêmité supérieure, oblique du revêtement en aluminium (3) est insérée dans ladite rainure verticale du profil en plastique (5) et l'extremité inférieure, horizontale du profil en plastique (5) est fixée sur la surface supérieure, horizontale du chassis fixe en bois (1) au moyen de vis (7), que le cadre est en outre, **caractérisé en ce qu'**il a un profil inférieur en plastique qui ferme toute la longueur de la partie inférieure de la couche extérieure, que ledit profil inférieur en plastique comprend une rainure verticale à fond circulaire, arrangée sur son extrémité extérieure, que la partie inférieure de la couche extérieure est fixée sur le chassis fixe en bois (1) au moyen dudit profil inférieur en plastique, de sorte que la languette verticale à bout circulaire (4) arrangée sur l'extrémité inférieure verticale du revêtement en aluminium (3) est insérée dans la rainure verticale dudit profil inférieur en plastique, et que l'extrémité intérieure, horizontale du cadre inférieur en plastique est fixée au moyen de vis (7) sur la surface inférieure horizontale du chassis fixe en bois (1).

3. Le cadre de la couche extérieure des cadres composés, selon les revendications 1 ou 2, pour fenêtres et portes, comprenant un chassis fixe en bois (1), **caractérisé en ce que** l'extrémité supérieure du profil en plastique (5) et l'extrémité du revêtement en aluminium (3) forment une rainure destiné à recevoir le joint d'étanchéité haute, extérieur en caoutchouc et que, en usage, l'extrémité inférieure, horizontale du profil en plastique (5) et le chassis fixe en bois (1) forment une rainure destiné à recevoir le joint d'étanchéité bas, extérieur en caoutchouc.

4. Le cadre de la couche extérieure des cadre selon la revendications 3, pour fenêtres et portes mixtes, comprenant un chassis fixe en bois (1) et comprenant en outre, un cadre ouvrant en bois d'une aile (8), **caractérisé en ce que**, en usage, la couche extérieure commune est fixée sur le chassis fixe en bois (1), tandis que le cadre ouvrant de l'aile n'a pas de couche extérieure fixée sur lui-même, que l'extrémité supérieure de la couche commune s'appuie sur le cadre mobile de l'aile à travers le joint d'étanchéité supérieur, extérieur.

5. Le cadre de la couche extérieure des cadres de fenêtres et de portes mixtes, pour les chassis mobiles d'ailes en bois (8), ledit cadre comprenant une couche extérieure constituée d'une épaisse couche (9) de matériaux polymères mousseux tel que polystyrène ou polyurethane et d'un revêtement d'aluminium (10) avec une languette rectangulaire (11), ladite couche extérieure étant fixée sur le chassis mobile d'ailes en bois (8), **caractérisé en ce que** le cadre comprend en outre, plusieurs attaches en plastique (15) dont le bout extérieure comporte une rainure rectangulaire, horizontale et celui intérieure comporte une rainure horizontale à fond circulaire, et lequelles sont à leur tour placées, en usage, à égales distances mutuelles sur la longueur du côté du cadre de l'aile (8) au moyen de plusieurs attaches en plastique (15), et **en ce que** le chassis est pourvu de plusieurs supports en plastique (12) disposés à égales distances mutuelles sur la longueur du côté du cadre de l'aile (8), que les supports en plastique (12) comprennent des languettes horizontales à bouts circulaires (13), que les supports en plastique sont en outre, fixés sur la surface extérieure du cadre de l'aile (8) au moyen de vis (7), la partie supérieure de la couche épaisse en polymère (9) étant liée par une bande adhesive double face extérieure (14) sur laquelle celle-ci est collée, que ladite bande collante est, à son tour, collée sur les bords d'un verre ou d'un rembourrage du cadre, et que ce verre ou ce rembourrage sont en outre, collés au moyen de plusieures supports en plastique (12) et la partie inférieure de la couche extérieure étant fixée de sorte que les rainures rectangulaire horizontales des attaches en plastique (15) sont enfilées sur les languettes rectangulaires horizontales (11) du revêtement en aluminium (10), et que les rainures horizontales à fond circulaire sont à leur tour, enfilées sur les languettes horizontales à bout circulaires (13) des supports en plastiques (12).
